# EUROPEAN PATENT APPLICATION

(11) **EP 2 347 809 A1**
(43) Date of publication of application: **27.07.2011**
(21) Application number: 10075029.8
(22) Date of filing: 20.01.2010
(51) Int. Cl.: A63F 13/00

(54) **Crowd control system and method**

(71) Applicant: Blue Banana bvba, 2880 Bornem (BE)
(72) Inventor: Pellegrims, Koen, 2880 Bornem (BE); Remmerie, Robby, 3272 Testelt (BE)
(74) Representative: Plas, Axel Ivo Michel

(57) **Abstract**

A crowd control system for enabling a crowd of people (311, 312) to interactively engage with software comprises:
- sensory input means for capturing a crowd of people's collective action, location or movement in a two-dimensional or three-dimensional space (101);
- processing means (102; 262) for processing the crowd of people's collective action, location or movement to thereby extract parameter values;
- control means (103) for controlling the software based on the parameter values; and
- a feedback device (104) for providing feedback from the software to the crowd of people (311, 312).

## Description

### Field of the Invention

The present invention generally relates to experiencing interaction with software applications like digital gaming, visual art creation, audio production, etc. More particularly, the invention concerns control of such a software application by a group of people, team, audience, etc., generally called a "crowd" throughout the present patent application, whose collective gestures, movements throughout space and collaboration will be used as an input for controlling the software application.

### Background of the Invention

The gaming and entertainment industry has evolved fast the past decade mainly as a result of technological innovation. The increased processing power, the advanced graphics, and the Internet lie at the basis of the immense popularity of online gaming. With respect to input mechanisms for controlling games, the most successful innovation is probably to be found in the Wii controller, the nunchucks and the Wii balance board that enable a player to control the course of a game through simple movements rather than the classic joystick or button controller.

However, most innovations that have boosted the gaming and entertainment industry the past decade concentrate on the player's individual experience and pleasure. Attempts where the physical motion or input of groups of people is used to achieve a result, are rather limited. Most of the prior art considers the group's result as a simple accumulation of the individual results, as will be demonstrated in the following paragraphs.

The article "Volvo Interactive Cinema Gaming" published on June 24, 2008 in DirectDaily, refers to an in-cinema game experience where motion sensors were used to allow moviegoers to become human joysticks controlling the driving direction of a Volvo car in a game displayed on the big cinema screen. The audiences of twelve cinema's across the UK were given a chance to compete in real-time against each other in a video game where the Volvo car has to traverse a number of obstacles from start to finish. The DirectDaily article can be retrieved from the Internet via the following URL:
http://directdaily.blogspot.com/2008/06/volvo-interactive-cinema-gaming.html

Although Volvo's cinema driving game facilitates crowds of people to remotely compete with each other in a real-time video game, it does not use the crowd's collaborative efforts and achievements as an input for the gaming software. The system known from Volvo counts rather static, individual efforts such as the number or percentage of individuals moving their arms leftwards or rightwards, and uses these accumulated individual efforts as input to control the video game software. Also, Volvo's game is geared towards a seated audience and does not use the motion of people across the room or derivatives thereof as an input for controlling the game.

In the article "MSNBC's Newsbreaker Live Goes Live" of 8 May 2007, that can be retrieved from the Internet via the URL:
http://kotaku.com/258765/msnbcs-newsbreaker-live-goes-live
reference is made to an earlier initiative wherein audience participation is used to control the onscreen action in an in-theatre video game. The spectator's synchronized movements are used to manipulate a paddle in a variant of the popular Brick Breaker game. By moving the paddle, a bouncing ball keeps breaking bricks. As each brick breaks, real-time news headlines are displayed on the screen.

Just like the Volvo game, MSNBC's crowd game experience uses motion-sensor technology in the spectator's seats to track the movement of each individual, and counts or accumulates the individual efforts in order to control the movement of the paddle in the video game. Whereas the Volvo game allows multiple teams or crowds at remote locations to compete against each other, the MSNBC game is an in-theatre game played by a single crowd. Further, the MSNBC game has similar disadvantages in that it does not use the crowd's collective achievements as input for the game, but rather counts individual participation.

International Patent Application WO 01/26073 entitled "System and Method for Providing an Interactive Environment for a Large Group of People" describes an interactive video game environment for a crowd, e.g. an audience in a concert stadium or sports arena, where graphics displayed on a display screen depend on the cumulative cheers or audible sounds produced by the crowd, or on the location of a physical object in the stadium, e.g. a giant beach ball that is moved through the stadium by the audience and that contains a transmitter for transmitting signals that enable to determine the position of the ball within the stadium.

Although WO 01/26073 mentions in the paragraph on page 1, lines 26-35, the problem that the game and entertainment industries fail to address the simultaneous participation of a large group of people, the solutions proposed in WO 01/26073 to that problem rely only on accumulated individual participation (such as the measurement of a sound level produced) or on the result of sequential individual participation. Indeed, the movement of the ball or object through a stadium is not a crowd achievement resulting from collaboration, but rather the result of sequential individual actions. Thus, also WO 01/26073 fails to disclose an interactive environment wherein the crowd's collective achievement, resulting from collaboration rather than from individual participation, is used to control software. As with the other examples described here above, physical displacement of the crowd throughout the stadium is not used as an input parameter.

Yet another prior art solution, with similar disadvantages, is known as "argoMass" from de pinxi. By branding green or red batons, the audience participates to a show. Cameras are used to count the number of batons, the number of batons having a particular colour, the number of batons moving, etc. More detailed information with respect to argoMass is retrievable at the Internet via URL:
http://www.depinxi.com/?section=solutions&subsection=mass

Instead of a collective crowd or team achievement, which typically requires communication and collaboration between the team members, argoMass counts the number of individuals participating, and uses this as an input to control elements in a show, e.g. the opening of a door.

Existing prior art solutions enabling interaction between a crowd and software all count or accumulate individual actions and reduce the crowds actions to a simple parameter or mathematical operator such as the sum of the actions, or the mathematical average, which is then used as an input for the software. Such systems can be implemented rather straightforwardly using a camera, motion sensor or microphone on the one hand, and a counting device or tool for measuring the light intensity or sound level. Existing solutions for controlling game or entertainment software applications however fail to measure and use as input a collective crowd achievement that results from collaboration, communication and interaction between the crowd members.

It is therefore an objective of the present invention to disclose a system and method that overcomes the above mentioned drawbacks of prior art solutions, i.e. a system wherein the crowd's collective achievement is used for real-time interaction with software.

### Summary of the Invention

According to the present invention, the above described objectives are realized by a crowd control system for enabling a crowd of people to interactively engage with software, as defined by claim 1, the crowd control system comprising:
- sensory input means for capturing a crowd of people's collective action, location or movement in a two-dimensional or three-dimensional space;
- processing means for processing the crowd of people's collective action, location or movement to thereby extract parameter values;
- control means for controlling the software based on the parameter values; and
- a feedback device for providing feedback from the software to the crowd of people.

Indeed, in the system according to the invention, crowd dynamics such as the collective action, location or movement of a crowd in a two-dimensional or three-dimensional space are used for interfacing with computer software. The game or entertainment software in other words is controlled through one or more signals or parameter values that are derived from the collective motions and actions of a crowd of people. Such system requires more complex sensory input enabling to capture the crowd's motion and a processor for analyzing the crowd's motion for instance through segmentation and pattern recognition. The system allows for complex interactions with the software or digital application such as but not limited to the movement of one or more objects or persona, and triggering events. The system produces not necessarily a single output, since the crowd's collective action or movement can result in several parallel actions and signals into the application. This allows the crowd to control several objects simultaneously or to perform actions and events while moving objects in the digital application. Even if all individuals participate, the crowd may fail to succeed controlling the software as preferred because the required collective achievement is not met, for instance as a result of absent or poor communication and collaboration between the crowd's members. Communication and coordination between the team or crowd members will be essential to interact successfully with the system according to the current invention.

In addition to a crowd control system as defined by claim 1, the current invention also concerns a corresponding method for enabling a crowd of people to interactively engage with software, comprising the steps of:
- capturing a crowd of people's collective action, location or movement in a two-dimensional or three-dimensional space;
- processing the crowd of people's collective action, location or movement to thereby extract parameter values;
- controlling the software based on the parameter values; and
- providing feedback from the software to the crowd of people.
This method is defined by claim 8.

As is indicated by claim 2, the sensory input means in the crowd control system according to the invention may optionally comprise one or more of the following:
- a Global Positioning System (GPS) transceiver;
- a Wireless Local Area Network (WLAN) transceiver;
- a meshed wireless network transceiver;
- an RFID transceiver;
- an active playfield;
- a camera;
- an infrared or IR sensor;
- a laser;
- a motion sensor;
- a gyroscope.

One or more GPS transceivers may be used to determine the location of the crowd in a 2D or 3D space. When assisted by a memory and a clock or timer, it becomes feasible to track the trajectory, speed or even acceleration of a crowd. If each or plural individuals in the crowd are equipped with a GPS transceiver, their respective signals may be processed for recognizing patterns created by the crowd in space or time. Depending on the application, GPS transceivers however may not be accurate enough. For indoor applications, GPS transceivers may even fail to work.

Wireless Local Area Network (WLAN) transceivers such as a WiFi transceiver, or meshed wireless network technology like Zigbee transceivers, eventually in combination with triangulation technology, may enable to determine or track the position and motion of a crowd where GPS fails.

In case the crowd's 2D or 3D motion space is limited, an active playfield with sensitive pads may be used to capture the crowd's location or movement. This way, the current invention would be able to extend for instance the popular Wii experience to crowds.

In case the space is illuminated, one or more camera's could be used, eventually in combination with image processing tools for segmentation and pattern recognition, to capture the crowd's collective movements in the two- or three-dimensional space. In a non- or poorly illuminated space, the cameras could be replaced with infrared (IR) sensors.

Yet another alternative for capturing the crowd's movement consists in laser technology. Laser technology however has some limitations since it requires a line-of-sight to detect shapes, patterns, etc. created by the crowd.

One or more individuals can be equipped with a motion sensor or a gyroscope to determine their relative position by means of dead-reckoning.

Whereas the above examples concern technical implementations for determining the location of the crowd, alternative sensory input means may be used when the crowd's collective achievement that is sensed is the audio level, the colour pattern, the 2D or 3D shape, etc.

As defined by claim 3, the processing means in the crowd control system according to the present invention may optionally comprise one or more of the following:
- triangulation means;
- an image processor;
- segmentation means; and
- pattern recognition means.

Indeed, as already indicated here above, triangulation may be used in combination with certain technology such as WIFI transceivers to determine more accurately the location of the crowd in a two-dimensional or three-dimensional space. An image processor on the other hand can be used in combination with cameras in order to determine the location or movement of the crowd. The crowd may be segmented and the movement or location of parts of the crowd may be used to control certain inputs of the software. Further, patterns may be recognized in the location or movement of the crowd. Examples of such patterns are a shape (a triangle, a circle, etc.), a colour or colour scheme,

As is indicated by claim 4, the parameter values that are used to control the software in the crowd control system according to the present invention may comprise one or more of the following:
- position of the crowd;
- speed of the crowd;
- shape of the crowd;
- acceleration of the crowd;
- rotation of the crowd;
- colour of the crowd.

When using appropriate sensory input and processing means, each of these parameters can be quantified for the collective crowd: the absolute or relative position in the two-dimensional or three-dimensional space, the speed at which the crowd is moving in the two-dimensional or three-dimensional space, the two-dimensional or three-dimensional shape that is formed by the crowd, the acceleration of the crowd in the two-dimensional or three-dimensional space, the rotation of the crowd, and the colour or colour pattern created by the crowd.

As is further indicated by claim 5, the feedback device in the crowd control system according to the present invention may comprise one or more of the following:
- a display;
- a projector screen;
- a LED panel;
- an audio device;
- a lighting device; and
- immersive technology.

The feedback device in other words is any instrument that serves to give real-time feedback to the crowd. The feedback may be visual when displayed on a screen, light panel or display, but alternatively may be audible when the software for instance selects music, rhythms, etc. in response to the crowd's location or movement through the two- or three-dimensional space. Immersive technology may for instance comprise display goggles. The feedback device may be shared by all players, for example with a large LED panel, or could be personal to each of the players, for example with display goggles or special-purpose devices carried by each player.

Further optionally, as is indicated by claim 6, the software may comprise one or more of the following:
- an electronic game such as Pong, Balancer, Space Invaders;
- software applications for learning;
- music control software; and
- lighting control software.

Pong is a two-dimensional simulation of the ping-pong game. In the traditional game, each player controls a paddle that moves vertically up and down. With their paddles, the players bounce a ball back and forth. When a player cannot bounce the ball back with his paddle, the other one scores. According to the present invention, the crowd controlled version of Pong would consist in teams of people holding hands to form a chain whose position and length would determine the position and width of the paddle on the screen. People at the extremities of the paddle will determine the width of the paddle. It is of course the objective to make a paddle as wide as possible without breaking up the chain. The speed and angle of the ball depend on how the ball is hit by the paddle, like in the original Pong game. Cameras may be used to capture the movements of the human chain in a two-dimensional space and an image processor will transform the position and length of the chain into parameter values that will be input to the Pong software to determine the position and width of the paddle. Crowds playing against each other may be at different locations, for instance on opposite beaches along an ocean or sea for a virtual, cross-ocean Pong game.

Balance Board is a game that exists in many variants. The goal always is to move a ball from a starting position to a target position by toppling a board. The board typically contains obstacles like holes, a maze or labyrinth. In the crowd controlled version of Balance Board, the board that is visualized in a big screen would be toppled by displacement of the point of gravity (or weight distribution) of the collective crowd. When the crowd moves, a processor will calculate the new point of gravity and simulate a corresponding toppling of the board on the screen, as a result of which a ball will move in the one or the other direction. Communication and coordination within the crowd will be essential to succeed in the crowd controlled Balance Board.

In the crowd controlled version of Space Invaders, the first team which plays the role of invaders can move left and right individually. Their height is controlled automatically and each player can drop a limited number of bombs. The second team plays the role of spaceship. The space ship has a fixed size and the team can move left or right. One person in the second team operates the fire button to counter the invader's bombs. This example illustrates that embodiments of the invention may be able to simultaneously process multiple actions of multiple groups of people (crowds), and to produce multiple actions for the game or digital application in parallel: movement of spaceship and firing button.

Whereas the just described examples concern crowd controlled variants of existing games, the digital application or software that is controlled according to the present invention may alternatively be a lighting panel used for marketing, audio mixing or producing software, an application on music concerts where the crowd becomes a musical instrument by means of its collective movement or actions, a learning application, etc.

Further optionally, as defined by claim 7, the crowd control system according to the invention may comprise:
- means for projecting a virtual object or virtual field for augmented reality by the crowd of people.

Thus, an additional, optional advantage of the crowd control system according to the current invention concerns its adaptability to augmented reality applications. By projecting or visualizing virtual objects or a virtual playfield in the space where the crowd is, the system may flirt between real and virtual world e.g. to influence, control, hinder or facilitate the crowd's motion.

### Brief Description of the Drawings

Fig. 1 illustrates an embodiment of the crowd control system according to the present invention conceptually;

Fig. 2 is a scheme illustrating an embodiment of the crowd control method according to the present invention;

Fig. 3A is an first illustration of an embodiment of the crowd control system according to the present invention for controlling a Pong game;

Fig. 3B is a second illustration of the embodiment of the crowd control system according to the present invention for controlling a Pong game;

Fig. 3C is a third illustration of the embodiment of the crowd control system according to the present invention for controlling a Pong game;

Fig. 4 is an illustration of an embodiment of the crowd control system according to the present invention for controlling a Balance Board game; and

Fig. 5 is an illustration of an embodiment of the crowd control system according to the present invention for controlling a Space Invaders game.

### Detailed Description of Embodiment(s)

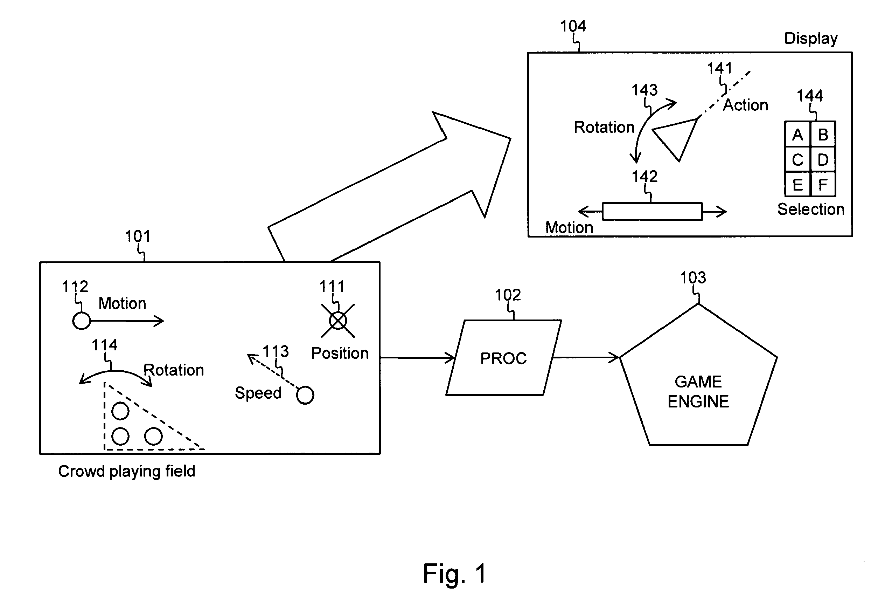

Fig. 1 shows the conceptual building blocks of an embodiment of the invention. A crowd's collective movement in a two-dimensional crowd playing field 101 is captured through sensors. The collective movement in this embodiment includes the crowd's position 111 in the playing field 101, the crowd's motion 112 in the playing field 101, the crowd's velocity or speed 113 in the playing field 101, and the crowd's rotation 114 in the playing field 101. The sensory inputs are used by a processor 102 to control a digital game engine 103. The digital game engine 103 provides visual feedback or response to the crowd via a large display 104 that displays a first object, represented by a triangle in Fig. 1, whose action 141 and rotation 143 are controlled through the crowd's speed 113 and rotation 114; a second object 142 whose motion is controlled through the crowd's motion 112; and a third object 144, i.e. a table wherein a selection can be made amongst six different choices represented by A, B, C, D, E and F in Fig. 1, the selection being controlled through the crowd's position 111 in the playing field 101.

It is noticed that the crowd's collective action and movement in the two-dimensional playing field 101 may be complex and consist of the simultaneous or parallel position, motion, speed and rotation of parts or clusters of the crowd. This way multiple objects and parameters in the digital game can be controlled simultaneously by a single crowd that is obliged to collaborate and communicate in order to perform well and achieve the desired result. Such part or cluster of the crowd may consist of a single individual in the crowd whose 2D or 3D movement for instance controls a single parameter in the digital application.

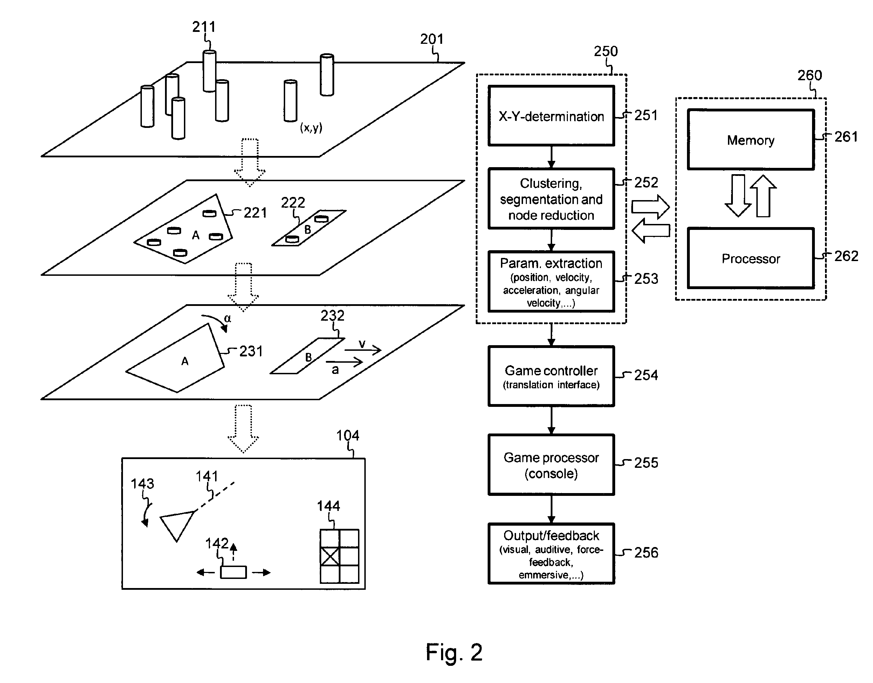

Fig. 2 shows the successive steps in an embodiment of the method and system according to the invention. The drawings on the leftmost side illustrate the successive steps when executed by the embodiment of the crowd control system according to the invention that has been depicted in Fig. 1. The elements 211 represent members of the crowd whose collective actions, locations, movements control objects in a digital game. The crowd members 211 thereto move in a two-dimensional space 201 where the coordinates (x,y) are determined as is indicated by step 251. The coordinates of the crowd members 211 are at least temporarily stored in memory 261 and are processed by processor 262 with a clustering, segmentation and node reduction algorithm in step 252. This way, clusters or parts of the crowd that collective act or move, like for instance cluster A or 221 and cluster B or 222 are recognized. In step 253, the processor 262 thereupon extracts certain parameter values from the action(s), location(s) or movement(s) of the recognized clusters. The parameters may include - but certainly are not limited to - the position, the velocity, the acceleration, the angular velocity, etc. In the example illustrated by Fig. 2, the processor 262 for instance extracts the rotation angle α of polygon 231 that was formed by the crowd, more particularly by cluster 221 or A of the crowd. In addition the processor 262 determines the velocity v and acceleration a of polygon 232 that was formed by the crowd, more particularly by cluster 222 or B of the crowd. A translation interface of the digital game controller translates the extracted parameter values into input signals for the digital game processor. This is indicated by step 254 in Fig. 2. The input signals are transferred to the game processor in step 255. In step 256, the latter game processor then generates feedback for the crowd. Whereas this feedback can be of different nature, e.g. visual, audible, force-feedback, emmersive, etc., it is supposed to be a visual displacement or selection of objects on display 104 in Fig. 2. A triangle may for instance rotate as is indicated by arrow 143, and may perform an action 141, e.g. firing a missile when the triangle is supposed to represent an airplane. Further, the position of rectangle 142 may change, and a selection may have been made in table 144, as a result of the crowd's collective efforts to control the digital game.

In Fig. 2, it is further indicated by 250 that the determination or sensing of the crowd's location, motion or activity 251, the clustering and segmentation 252, and the parameter extraction 253 that lie at the basis of the current invention are typically executed by a separate processor 262 with memory 261, jointly referred to as 260 in Fig. 2. This separate processor with memory 260 may for instance form part of a PC or work station. The translation 254, digital game control 255, and feedback processing 256 may be done separately, e.g. by an existing game console or game processor.

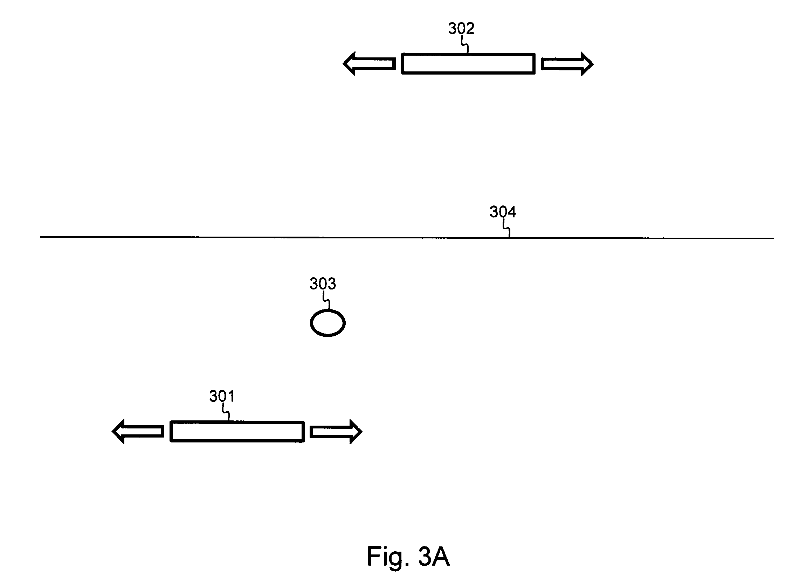

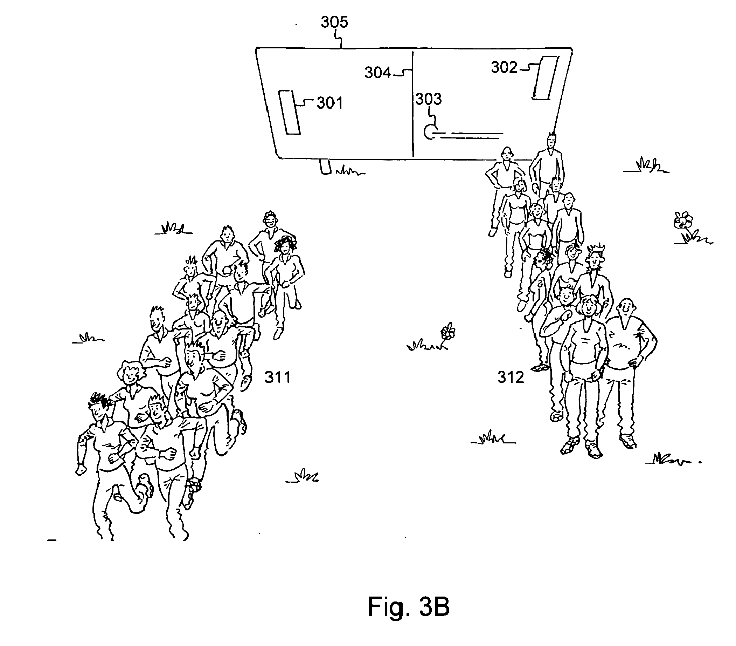

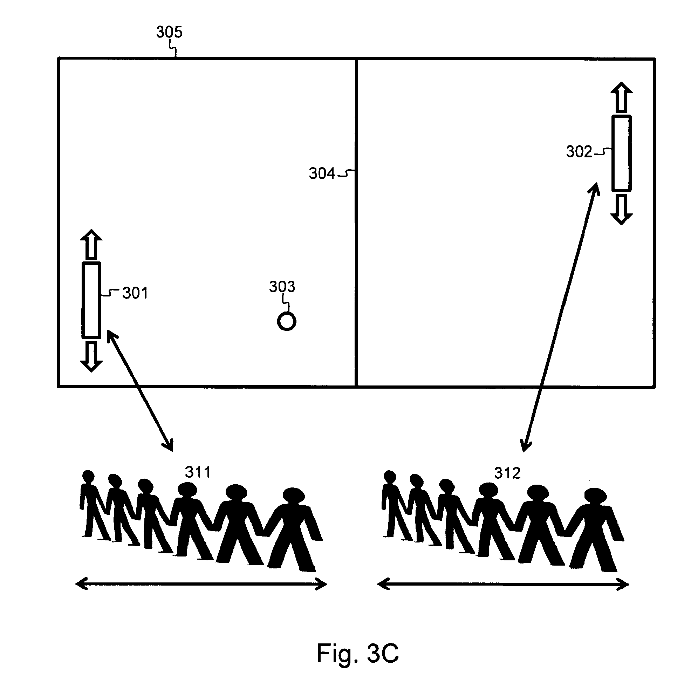

Fig. 3A, Fig. 3B and Fig 3C illustrate a crowd control system according to the invention for playing Pong.

Fig. 3A shows the elements displayed on the screen or feedback device. A ball 303 is bounced back and forth across a middle line 304 by two paddles 301 and 302. The paddles 301 and 302 can move left or right as is indicated by the arrows. The speed and the angle at which the ball 303 is bounced back by a paddle depend on how the ball 303 is hit by the paddle. If a team fails to bounce back the ball 303, the other team scores.

Fig. 3B shows the screen or feedback device 305 whereon the paddles 301 and 302, as well as the ball 303 and middle line 304 are shown. According to the invention, the paddles 301 and 302 are moved left/right (or up/down in Fig. 3B) under control of respective teams 311 and 312. Team 311 forms a chain, e.g. a line or rectangle, and moves back and forth in order to control the movements of paddle 301 on the screen 305 to bounce back the ball 303. The speed and angle of the ball 303 will depend on how it is hit by the paddle 301. The team further controls the width of the paddle 301. The extremities of the chain formed by team 311 will determine the length of the paddle 301. Apart from moving towards the ball, it is therefore an objective for the team to make the paddle 301 as widely as possible without breaking up, to reduce the chances of missing the ball 303.

As is indicated by Fig. 3C, the movements of team 311 and the length of the chain formed by team 311 will be registered by sensors, e.g. cameras, and will be processed and translated into a corresponding position and length of paddle 301 on screen 305. In a similar way, team 312 controls the position, width and movement of paddle 302 on the screen 305. The teams that compete against each other may be at a single location, using the same screen, as is shown in Fig. 3B, Alternatively, the teams may be at different locations, each watching their own screen, with real-time communication between the two locations such that both teams simultaneously watch the paddles and ball movements.

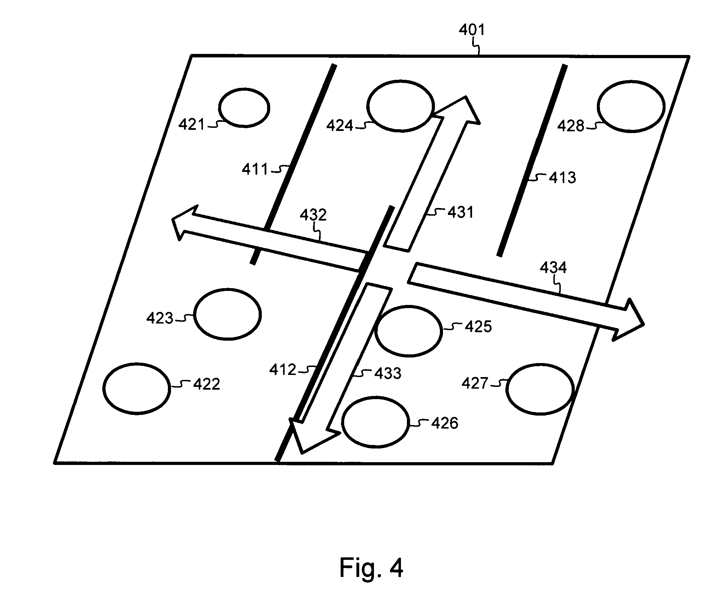

Fig. 4 illustrates a crowd control system according to the invention for playing Balancer. The display of this system shows a board 401 with hindrances 411, 412 and 413. By balancing or tilting the board 401 a virtual ball 421 will roll. The intention of the game is to move the ball 421 along the hindrances from its starting position to a finish. This is illustrated in Fig. 4 through the successive positions 421, 422, 423, 424, 425, 426, 427 and 428 which describe a possible trajectory to move from start to finish. For balancing or tilting the board 401, the board 401 will respond to the virtual weight distribution of the crowd or team that is playing the game. Cameras will register the collective movement of the crowd and a processor will calculate the weight distribution of the crowd and derive thereof control signals for tilting the board up (direction 431), down (direction 433), left (direction 432) or right (direction 434). By collaborating, the crowd will be able to change its weight distribution in a two-dimensional playfield such that the board 401 is tilted and balanced thereby moving the ball 421 from its start location to the target location 428 along the hindrances.

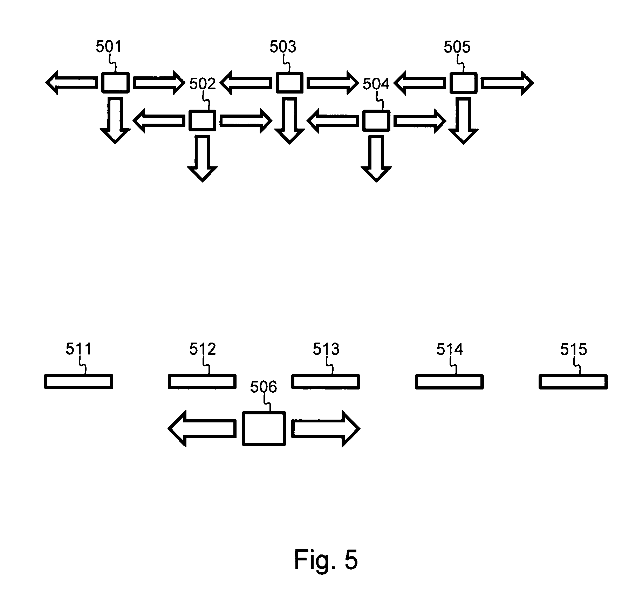

Fig. 5 illustrates yet another embodiment of the crowd control system according to the invention, enabling two teams to compete against each other in a crowd controlled variant of Space Invaders. The first team plays the role of invaders. By moving left or right in a two-dimensional playfield where the movements of individuals are registered, e.g. through GPS, RFID, or triangulation techniques, the individual players move the spacecrafts 501, 502, 503, 504 and 505 of the invaders. Each individual can drop a limited number of bombs, for instance by jumping. The height of the spacecrafts 501, 502, 503, 504 and 505 is supposed to be controlled automatically, although a variant of the game can be considered where the team members are given control over the height as well through specific actions or movements that are captured by sensors. The second team plays the role of starship. The starship is represented by a rectangle 506 of fixed size that moves left or right depending on the collective movement of the second team. The starship 506 obviously has to avoid the bombs 511, 512, 513, 514, 515 dropped by the invaders 501, 502, 503, 504 and 505. One individual in the second team may operate the fire button of the starship 506, e.g. by a dedicated action or movement that is tracked by a sensor. The game could optionally be played with more than two teams - plural invaders and/or plural starships may be displayed and controlled by respective teams - and it may optionally be played with missions to be completed by the teams.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A crowd control system for enabling a crowd of people (311, 312) to interactively engage with software, said crowd control system comprising:
- sensory input means for capturing a crowd of people's collective action, location or movement in a two-dimensional or three-dimensional space (101);
- processing means (102; 262) for processing said crowd of people's collective action, location or movement to thereby extract parameter values;
- control means (103) for controlling said software based on said parameter values; and
- a feedback device (104; 305) for providing feedback from said software to said crowd of people (311, 312).

2. A crowd control system according to claim 1,
wherein said sensory input means comprise one or more of the following:
- a Global Positioning System (GPS) transceiver;
- a Wirless Local Area Network (WLAN) transceiver;
- a ZigBee transceiver;
- an RFID transceiver;
- triangulation means;
- an active playfield;
- a camera;
- an infrared or IR sensor;
- a laser;
- a motion sensor;
- a gyroscope.

3. A crowd control system according to claim 1,
wherein said processing means (103) comprise one or more of the following:
- triangulation means;
- an image processor;
- segmentation means; and
- pattern recognition means.

4. A crowd control system according to claim 1,
wherein said parameter values comprise one or more of the following:
- position (111) of said crowd;
- speed (113) of said crowd;
- shape of said crowd;
- acceleration of said crowd;
- rotation (114) of said crowd;
- colour of said crowd.

5. A crowd control system according to claim 1,
wherein said feedback device (104; 305) comprise one or more of the following:
- a display;
- a projector screen;
- a LED panel;
- an audio device;
- a lighting device; and
- immersive technology.

6. A crowd control system according to claim 1,
wherein said software comprises one or more of the following:
- an electronic game such as Pong, Balancer, Space Invaders;
- software applications for learning;
- music control software; and
- lighting control software.

7. A crowd control system according to claim 1, further comprising:
means for projecting a virtual object or virtual field for augmented reality by said crowd of people.

8. A method for enabling a crowd of people (311, 312) to interactively engage with software, said method comprising the steps of:
- capturing (251) a crowd of people's collective action, location or movement in a two-dimensional or three-dimensional space (101);
- processing (252, 253) said crowd of people's collective action, location or movement to thereby extract parameter values;
- controlling (254, 255) said software based on said parameter values; and
- providing feedback (256) from said software to said crowd of people (311, 312).
